(19) Europäisches Patentamt
European Patent Office
Office européen des brevets

(11) **EP 4 293 131 A1**

(12) **EUROPEAN PATENT APPLICATION**
published in accordance with Art. 153(4) EPC

(43) Date of publication:
**20.12.2023 Bulletin 2023/51**

(21) Application number: **22771693.3**

(22) Date of filing: **14.03.2022**

(51) International Patent Classification (IPC):
**C22B 26/12** $^{(2006.01)}$   **C22B 7/00** $^{(2006.01)}$
**H01M 10/54** $^{(2006.01)}$

(52) Cooperative Patent Classification (CPC):
**C22B 7/00; C22B 26/12; H01M 10/54**

(86) International application number:
**PCT/KR2022/003513**

(87) International publication number:
**WO 2022/197027 (22.09.2022 Gazette 2022/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.03.2021 KR 20210034363**

(71) Applicant: **SK Innovation Co., Ltd.**
**Seoul 03188 (KR)**

(72) Inventors:
• **SUNG, Min Ji**
  **Daejeon 34124 (KR)**
• **SON, Sung Real**
  **Daejeon 34124 (KR)**
• **HONG, Suk Joon**
  **Daejeon 34124 (KR)**
• **KIM, Ji Min**
  **Daejeon 34124 (KR)**
• **KIM, Hyeon Jung**
  **Daejeon 34124 (KR)**
• **SEO, Young Bin**
  **Daejeon 34124 (KR)**

(74) Representative: **Frick, Robert**
**Lorenz Seidler Gossel**
**Rechtsanwälte Patentanwälte**
**Partnerschaft mbB**
**Widenmayerstraße 23**
**80538 München (DE)**

(54) **METHOD FOR REGENERATING LITHIUM PRECURSOR**

(57)     In a method for regenerating a lithium precursor, a positive electrode active material mixture including lithium composite oxide particles is prepared. The positive electrode active material mixture is agglomerated to prepare active material powder having a unimodal particle size distribution. A preliminary precursor mixture is prepared by reducing the active material powder. A lithium precursor is recovered from the preliminary precursor mixture. Accordingly, the recovery efficiency of the lithium precursor can be improved.

FIG. 1

PREPARING CATHODE ACTIVE MATERIAL MIXTURE — S10

AGGREGATING CATHODE ACTIVE MATERIAL MIXTURE TO PREPARE ACTIVE MATERIAL POWDER — S20

REDUCING ACTIVE MATERIAL POWDER TO PREPARE PRELIMINARY LITHIUM PRECURSOR — S30

PREPARING LITHIUM PRECURSOR FROM PRELIMINARY LITHIUM PRECURSOR — S40

EP 4 293 131 A1

**Description**

[TECHNICAL FIELD]

The present invention relates to a method for regenerating a lithium precursor. More particularly, the present invention relates to a method for r regenerating a lithium precursor from a waste lithium-containing compound.

[BACKGROUND ART]

A secondary battery which can be charged and discharged repeatedly has been widely employed as a power source of a mobile electronic device such as a camcorder, a mobile phone, a laptop computer, etc., according to developments of information and display technologies. The secondary battery includes, e.g., a lithium secondary battery, a nickel-cadmium battery, a nickel-hydrogen battery, etc. The lithium secondary battery is actively developed and applied among the secondary batteries due to high operational voltage and energy density per unit weight, a high charging rate, a compact dimension, etc.

The lithium secondary battery may include an electrode assembly including a cathode, an anode and a separation layer (separator), and an electrolyte immersing the electrode assembly. The lithium secondary battery may further include an outer case having, e.g., a pouch shape for accommodating the electrode assembly and the electrolyte.

A lithium metal oxide may be used as a cathode active material for the lithium secondary battery. The lithium metal oxide may further contain a transition metal such as nickel, cobalt, manganese, etc.

The lithium metal oxide as the cathode active material may be prepared by reacting a lithium precursor and a nickel-cobalt-manganese (NCM) precursor containing nickel, cobalt and manganese.

As the above-mentioned high-cost valuable metals are used for the cathode active material, 20% or more of a production cost is required for manufacturing the cathode material. Additionally, as environment protection issues have recently been highlighted, a recycling method of the cathode active material is being researched. For the recycle of the cathode active material, a regeneration of the lithium precursor with high efficiency and purity is needed.

DETAILED DECRIPTIONS OF THE INVENTION

[Technical Objective]

According to an aspect of the present invention, there is provided a method for regenerating a lithium precursor for recovering the lithium precursor from a lithium-containing compound with high efficiency and high purity.

[Technical Means]

In a method for regenerating a lithium precursor according to embodiments of the present invention, a cathode active material mixture that comprises a lithium composite oxide particle is prepared. The cathode active material mixture is aggregated to prepare an active material powder having a unimodal particle size distribution. The active material powder is reduced to prepare a preliminary precursor mixture. A lithium precursor is recovered from the preliminary precursor mixture.

In some embodiments, in preparing the cathode active material mixture, a cathode may be separated from a waste lithium secondary battery. The separated cathode may be pulverized to prepare the cathode active material mixture.

In some embodiments, the cathode active material mixture may have a multimodal particle size distribution.

In some embodiments, a particle size of the cathode active material mixture may be in a range from 10 to 500 $\mu$m.

In some embodiments, a particle size of the active material powder may be in a range from 20 to 1,000 $\mu$m.

In some embodiments, a density of the active material powder may be in a range from 1 to 10 g/cm$^3$.

In some embodiments, the active material powder may include aggregates having a volume fraction of 0.7 or more.

In some embodiments, the active material powder may include aggregates having a volume fraction of 0.58 or less.

In some embodiments, aggregating the cathode active material mixture may be performed using a disc pelletizer or a spray dryer.

In some embodiments, reducing the active material powder may be performed in a fluidized bed reactor using a reductive gas.

[Effects of the Invention]

According to example embodiments as described above, an active material powder having a unimodal particle size distribution may be prepared by aggregating a cathode active material mixture. In this case, the active material powder may be more easily fluidized, so that efficiency of a reductive process may be enhanced. Accordingly, a high-yield, high-purity lithium precursor may be more easily obtained.

Additionally, the active material powder may have a relatively large particle size. Accordingly, in a process of fluidizing the active material powder, an amount of the powder being scattered and outflow may be effectively reduced.

[Brief Descriptions of the Drawings]

FIG. 1 is a schematic flow diagram for describing a method for recovering a lithium precursor in accordance with example embodiments.

FIG. 2 is a schematic graph showing a minimum fluidization rate according to a density of an active material powder in accordance with example embodiments.

FIG. 3 is a schematic diagram showing a disk pelletizer in accordance with example embodiments.

FIG. 4 is a schematic diagram showing a spray dryer in accordance with example embodiments.

FIG. 5 is a schematic graph showing a minimum fluidization rate according to a volume fraction of an active material powder in accordance with example embodiments.

[Embodiments for Practicing the Invention]

In embodiments of the present invention, an active material powder having a unimodal particle size distribution is prepared by aggregating a cathode active material mixture. The active material powder has the unimodal particle size distribution to be more easily fluidized.

In the present specification, a unimodal particle size distribution refers to a case in which only one peak is present in a particle size distribution diagram of particles. For example, a multimodal particle size distribution refers to a case in which a plurality of peaks are present in the particle size distribution diagram of the particles.

Hereinafter, embodiments of the present invention will be described in detail with reference to the accompanying drawings. However, these are provided as examples and the present invention is not limited to those illustrated in the drawings.

As used herein, the term "precursor" is used to comprehensively refer to a compound including a specific metal to provide the specific metal included in a cathode active material.

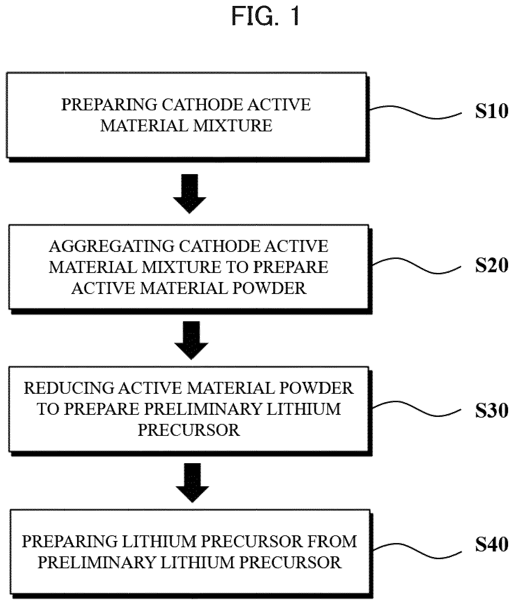

FIG. 1 is a schematic flow diagram for describing a method for recovering a lithium precursor in accordance with example embodiments.

Referring to FIG. 1, a cathode active material mixture including a lithium composite oxide may be prepared (e.g., in a step S10).

The cathode active material mixture may include a lithium-containing compound obtained or regenerated from an electric device or a chemical device. The cathode active material mixture may include various lithium-containing compounds such as lithium oxide, lithium carbonate, lithium hydroxide, etc.

The cathode active material mixture may include a lithium-containing compound obtained or recycled from a waste lithium secondary battery. The waste lithium secondary battery may include an electrode assembly including a cathode, an anode and a separator interposed between the cathode and the anode. The cathode and the anode may include a cathode active material layer and an anode active material layer coated on a cathode current collector and an anode current collector, respectively.

For example, the cathode active material included in the cathode active material layer may include a lithium composite oxide containing lithium and a transition metal.

In some embodiments, the cathode active material may include the lithium composite oxide represented by Chemical Formula 1 below.

$$[\text{Chemical Formula 1}] \qquad Li_xM1_aM2_bM3_cO_y$$

In Chemical Formula 1, M1, M2 and M3 may include a transition metal selected from Ni, Co, Mn, Na, Mg, Ca, Ti, V, Cr, Cu, Zn, Ge, Sr, Ag, Ba, Zr, Nb, Mo, Al, Ga or B. In Chemical Formula 1, $0 < x \leq 1.1$, $2 \leq y \leq 2.02$, $0 < a < 1$, $0 < b < 1$, $0 < c < 1$, and $0 < a+b+c \leq 1$.

In some embodiments, the cathode active material may include an NCM-based lithium composite oxide including nickel, cobalt and manganese. The NCM-based lithium composite oxide may be prepared by reacting a lithium precursor and an NCM precursor (e.g., an NCM oxide) with each other through a co-precipitation reaction.

However, embodiments of the present invention can be commonly applied to the cathode material including the NCM-based lithium composite oxide and a lithium composite oxide cathode material containing lithium.

For example, the cathode may be separated and recovered from the waste lithium secondary battery. As described above, the cathode may include a cathode current collector (e.g., aluminum (Al)) and the cathode active material layer, and the cathode active material layer may include a conductive material and a binder together with the above-mentioned cathode active material.

The conductive material may include, e.g., a carbon-based material such as graphite, carbon black, graphene, carbon nanotube, etc.

The binder may include a resin material, e.g., vinylidenefluoride-hexafluoropropylene copolymer (PVDF-co-HFP), polyvinylidenefluoride (PVDF), polyacrylonitrile, polymethylmethacrylate, etc.

In some exemplary embodiments, the cathode active material mixture may be prepared by separating a cathode from the waste lithium secondary lithium battery and pulverizing the separated cathode.

The pulverization may be performed using a commonly used pulverizing device. For example, the pulverization may be performed using a hammer mill, a shredder, a cut crusher, etc. The cathode active material mixture may be prepared in a powder form by the pulverization.

For example, the pulverized particles may be classified according to a particle size using a commonly used classifier after the pulverization. For example, the classifier may be a twist screen.

In some embodiments, the recovered cathode may be heat-treated before the pulverization. Accordingly, during the pulverization process, detachment of the cathode current collector may be promoted, and the binder and the conductive material may be at least partially removed. A temperature of the heat-treatment may be, e.g., in a range from about 100 to 500 °C, preferably from about 350 to 450 °C.

For example, the cathode current collector may be removed by immersing the separated cathode in an organic solvent. The cathode current collector may be removed from the separated cathode through a centrifugation, and the cathode active material mixture may be selectively extracted by removing the cathode current collector.

The cathode current collector component such as aluminum may be substantially completely separated and removed by the above processes, and the cathode active material mixture in which a content of the carbon-based components derived from the carbon-based conductive material and the binder is removed or reduced may be obtained.

In example embodiments, the cathode active material mixture may be aggregated to prepare an active material powder having a unimodal particle size distribution (e.g., in a step S20).

In some exemplary embodiments, the cathode active material mixture may have a multimodal particle size distribution.

In this case, the cathode active material mixture having the multimodal particle size distribution may be aggregated to prepare the active material powder having the unimodal particle size distribution.

For example, the cathode active material mixture having the multimodal particle size distribution may not be easily fluidized due to the cathode active materials having different particle sizes during a fluidization.

For example, if a gas flow rate for fluidizing the cathode active material mixture is low, sufficient fluidization may not be implemented. If the gas flow rate is high, the cathode active material having a small particle size may be scattered to degrade a recovery efficiency of the lithium precursor as will be described below.

The active material powder has the unimodal particle size distribution unlike the cathode active material mixture to be more easily fluidized by adjusting the flow rate of the gas according to the particle size of the active material powder. Thus, the recovery efficiency of the lithium precursor may be further improved.

In some example embodiments, the particle size of the cathode active material mixture may be in a range from about 10 to 500 $\mu$m. Within this range, aggregation of the cathode active material mixture may be effectively performed, so that active material powder having the unimodal particle size distribution may be more easily prepared.

In some example embodiments, the particle size of the active material powder may be in a range from about 20 to 1,000 $\mu$m. More preferably, the particle size of the active material powder may be in a range from 30 to 500 $\mu$m. For example, within the above ranges, fluidization of the active material powder to be described later may be more easily performed.

Additionally, when the particle size of the active material powder prepared in the process of aggregating the cathode active material mixture is within the above range, the active material powder having the unimodal particle size distribution may be more easily prepared.

In some example embodiments, the active material powder may have a density of about 1 to about 10 g/cm$^3$. For example, when the active material powder has the density range, the active material powder may be more easily fluidized.

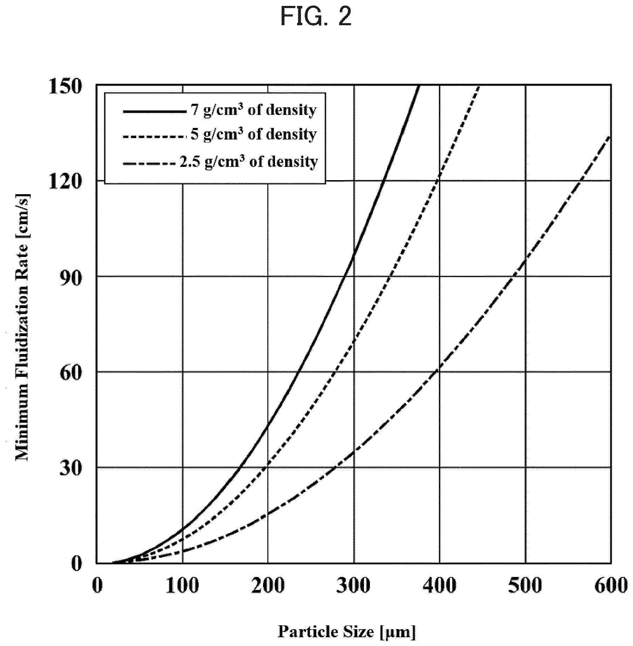

FIG. 2 is a schematic graph showing a minimum fluidization rate according to a density of an active material powder in accordance with example embodiments.

Referring to FIG. 2, for example, as the density of the active material powder increases, a fluidization rate for fluidizing the active material powder may increase. As the density decreases, the fluidization rate for fluidizing the active material powder may decrease.

In this case, the density of the active material powder may be appropriately adjusted according to a rate of the gas introduced into a fluidized bed reactor, which will be described later. Accordingly, the active material powder may be more easily fluidized. Thus, the recovery efficiency of the lithium precursor may be further improved.

In some example embodiments, the aggregation of the cathode active material mixture may be performed using a disc pelletizer or a spray dryer.

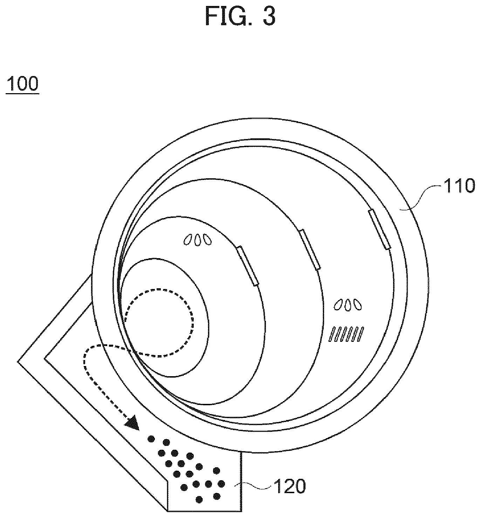

FIG. 3 is a schematic diagram showing a disk pelletizer in accordance with example embodiments.

Referring to FIG. 3, a disk pelletizer 100 may include an aggregation body 110 having a wide cylindrical shape obliquely erected, and the cathode active material mixture may be injected into the aggregation body 110 to be agglomerated into the active material powder having the unimodal particle size distribution.

For example, the cathode active material mixture may be rotated at an inside of the aggregation body 110. In this case, particles having a large particle size may be rotated at a lower portion of the aggregation body 110, and particles having a small particle size may be rotated at an upper portion of the aggregation body 110. Water may be sprayed on the cathode active material mixture rotating at the inside of the aggregation body 110, so that the cathode active material mixtures having different particle sizes may be agglomerated.

In this case, the cathode active material mixture having an increased particle size may move to the lower portion of the aggregation body 110, and the cathode active material mixture having a certain particle size may be discharged through a collector 120 located at the lower portion of the aggregation body 110. Accordingly, the active material powder having the unimodal particle size distribution may be easily produced.

For example, an angle between a lateral surface of the aggregation body 110 and a bottom surface may be in a range from 40 to 60°. The active material powder having the unimodal particle size distribution may be more easily produced in the above angle range.

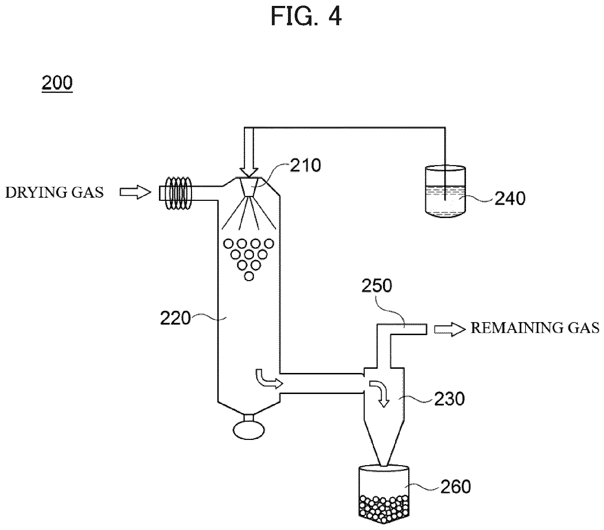

FIG. 4 is a schematic diagram showing a spray dryer in accordance with example embodiments.

Referring to FIG. 4, a spray dryer 200 may include a sprayer 210, a dry aggregation body 220 and a separator 230.

For example, an emulsion 240 may be prepared by mixing the cathode active material mixture and water. For example, the emulsion 240 may be injected into the dry aggregation body 220 through the sprayer 210. The sprayed emulsion 240 may be dried by a drying gas injected into an upper portion of the dry aggregation body 220. In this case, water may be evaporated so that the cathode active material mixture may be aggregated to form a preliminary active material powder. The preliminary active material powder may include an active material powder in which the cathode active material mixture is agglomerated and a non-aggregated cathode active material mixture.

For example, the injector 210 may include a spray nozzle. For example, a spray particle size of the spray nozzle may be about from 100 to 1,000 $\mu$m.

For example, the preliminary active material powder may move to the separator 230 and may be separated into the active material powder and the cathode active material mixture. For example, the preliminary active material powder may be separated into the active material powder and the cathode active material mixture by a cyclone formed by injecting a cyclone gas into the separator 230 .

For example, the preliminary active material powder may be helically rotated along an inner side of the separator 230 by the cyclone, and the active material powder having the increased particle by the aggregation during the rotation may gradually descend. Accordingly, the active material powder having the unimodal particle size distribution may be prepared. In this case, the prepared active material powder may be collected by an active material powder collector 260 located at a lower portion of the separator 230.

For example, the non-agglomerated cathode active material mixture separated from the preliminary active material powder may be scattered to an upper portion of the separator 230 by the cyclone. The dispersed cathode active material mixture may be discharged through an outlet 250 located at the upper portion of the separator 230 together with a remaining gas. For example, the cathode active material mixture discharged through the outlet 250 may be mixed with water again to prepare the emulsion 240 .

In some embodiments, a volume fraction of aggregates included in the active material powder may be selectively adjusted.

For example, a rotational speed of the aggregation body 110 of the above-described disk pelletizer 100 or the angle formed between the lateral side and a bottom surface of the aggregation body 110 may be controlled, so that the volume fraction of the aggregates in the active material powder may be adjusted.

For example, the volume fraction of the aggregates included in the active material powder may be adjusted by adjusting the spraying speed of the emulsion 240 through the injector 210 of the spray dryer 200 as described above.

For example, the volume fraction may mean a value obtained by subtracting a porosity of the aggregate from 1. For example, the porosity can be obtained by fully filling a container with particles (e.g., the aggregates), adding water to fully fill the container and then dividing an added amount of water added by a volume of the container.

In some embodiments, the active material powder may include the aggregates having a volume fraction of 0.7 or more (e.g., a void volume fraction of 0.3 or less). Preferably, the volume fraction may be in a range from 0.7 to 0.9.

For example, when the volume fraction of the aggregates included in the active material powder is within the above range, a bonding strength between the particles included in the aggregates may become relatively high. Accordingly, a ratio of particles lost by scattering (e.g., a particle scattering loss ratio) in a reductive treatment in the fluidized bed reactor as described later may become low.

In some embodiments, the active material powder may include the aggregates having a volume fraction of 0.58 or less (e.g., a void volume fraction of 0.42 or more). Preferably, the volume fraction may be in a range from 0.1 to 0.58.

For example, when the volume fraction of the aggregates included in the active material powder is within the above range, the fluidization may be smoothly performed, in the reductive treatment in the fluidized bed reactor. Accordingly, an input amount of a reductive gas and a carrier gas may become smaller, and productivity may be improved.

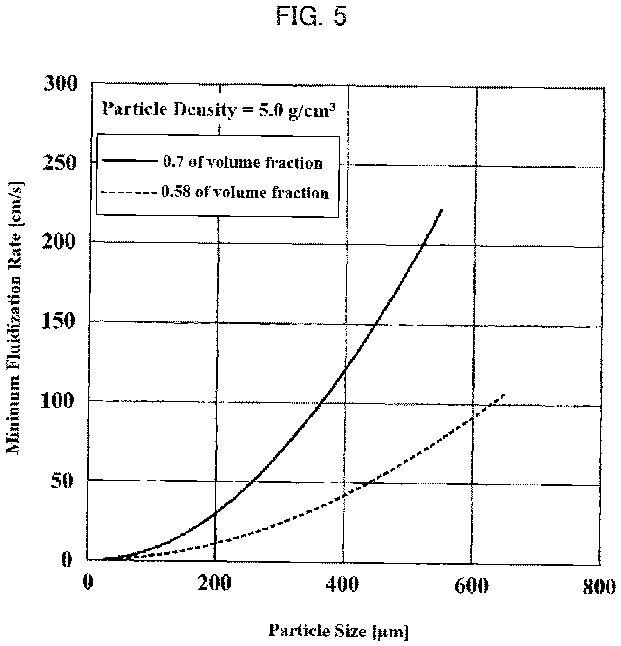

FIG. 5 is a schematic graph showing a minimum fluidization rate according to a volume fraction of an active material powder in accordance with example embodiments.

Referring to FIG. 5, as the volume fraction of the aggregates included in the active material powder becomes low, a minimum fluidization rate required for the fluidization may become low.

For example, the volume fraction of the aggregates included in the active material powder may be selectively and properly adjusted based on to the purpose and circumstances. Accordingly, enhanced processability and lithium precursor recovery ratio may be achieved.

In example embodiments, a preliminary precursor mixture may be prepared from active material powder (e.g., in a step S30). In example embodiments, the preliminary precursor mixture may be prepared by reducing the active material powder.

In some embodiments, a hydrogen reductive treatment may be performed using the fluidized bed reactor. For example, the active material powder may be introduced into the fluidized bed reactor, and the reductive gas may be injected from a lower portion of the fluidized bed reactor. For example, the reductive gas may be a hydrogen gas.

A cyclone may be formed from a lower portion of the fluidized bed reactor by the reductive gas to contact the active material powder, so that the preliminary precursor mixture may be generated.

In some embodiments, particles of the active material powder may not be agglomerated and may have a relatively small particle size (e.g., 200 $\mu$m or less). In this case, the reductive gas may be injected into the fluidized bed reactor at a flow rate of 8 to 12 cm/s. Accordingly, scattering of fine particles due to an excessive fluidization may be prevented, and the introduction of unnecessary reductive gas may be prevented to improve processability and productivity.

In some embodiments, particles of the active material powder may be partially agglomerated to have a relatively large particle size (e.g., 400 $\mu$m or more). In this case, the reductive gas may be injected into the fluidized bed reactor at a flow rate exceeding 16 cm/s. Accordingly, a smooth flow of the particles may be implemented and a uniform reduction may be performed.

For example, the cathode active material mixture may be aggregated in the above-described active material powder preparation. In this case, during the reductive treatment in the fluidized bed reactor, a loss ratio (e.g., the particle scattering loss ratio) of particles included in the active material powder being scattered upward may become small. Accordingly, the preliminary precursor mixture may be prepared while minimizing the loss of active material powder particles so that the high lithium precursor recovery ratio in a lithium precursor recovery step as will be described later may be obtained.

For example, the carrier gas may be mixed and injected from the lower portion of the fluidized bed reactor together with the reductive gas. Accordingly, a gas-solid mixing may be facilitated promoted to promote a reaction in the fluidized bed, and a reaction layer of the preliminary precursor mixture in the fluidized bed reactor may be easily formed. The carrier gas may include, e.g., an inert gas such as nitrogen ($N_2$) or argon (Ar).

The preliminary precursor mixture may include a hydrogen reduction product of a lithium-transition metal oxide included in the active material powder. When an NCM-based lithium oxide is used as the lithium-transition metal oxide, the preliminary precursor mixture may include a preliminary lithium precursor and a transition metal-containing product.

The preliminary lithium precursor may include lithium hydroxide, lithium oxide and/or lithium carbonate. In example embodiments, the preliminary lithium precursor may be obtained by the hydrogen reduction reaction, and a mixed content of lithium carbonate may be decreased.

The transition metal-containing product may include Ni, Co, NiO, CoO, MnO, etc. The hydrogen reduction reaction may be performed at a temperature from about 400 to 700 °C, preferably from 450 to 550 °C.

In example embodiments, after collecting the preliminary precursor mixture, a washing treatment may be performed (e.g., in a step S40).

The preliminary lithium precursor may be substantially converted into a lithium precursor substantially consist of lithium hydroxide by the washing treatment. For example, lithium oxide and lithium carbonate included in the preliminary lithium precursor may be converted to lithium hydroxide by reacting with water or may be removed by the washing with water. Thus, a high-purity lithium precursor converted into a desired form of lithium hydroxide may be produced.

The preliminary lithium precursor may be reacted and dissolved in water to substantially prepare an aqueous solution of lithium hydroxide.

The transition metal-containing product included in the preliminary precursor mixture may be precipitated without dissolving or reacting with water by the washing treatment. Thus, the transition metal-containing product may be separated by a filtration to obtain a lithium precursor including the high-purity lithium hydroxide.

In some embodiments, the washing treatment may be performed under a condition in which carbon dioxide ($CO_2$) is excluded. For example, the washing treatment may be performed in a $CO_2$-free atmosphere (e.g., an air atmosphere from which $CO_2$ is removed), so that regeneration of lithium carbonate may be prevented.

In an embodiment, water provided during the washing treatment may be purged using a $CO_2$ deficient gas (e.g., a nitrogen purging) to create a $CO_2$-free atmosphere.

In some embodiments, the precipitated transition metal-containing product may be treated with an acid solution to form a precursors in the form of an acid salt of each transition metal. In an embodiment, sulfuric acid may be used as the acid solution. In this case, $NiSO_4$, $MnSO_4$ and $CoSO_4$ may each be recovered as the transition metal precursor.

As described above, the preliminary precursor mixture produced by the hydrogen reduction may be washed with water to obtain the lithium precursor substantially consisting of lithium hydroxide. Thus, by-products of other types of lithium precursors such as lithium carbonate may be prevented so that the cathode active material having a higher capacity and an extended life-span may be achieved.

The lithium precursor may include lithium hydroxide (LiOH), lithium oxide ($Li_2O$) or lithium carbonate ($Li_2CO_3$). Lithium hydroxide may be advantageous as the lithium precursor from aspects of charge/discharge properties, life-span properties and high-temperature stability of a lithium secondary battery. For example, lithium carbonate may cause a deposition reaction on the separator, thereby degrading life-span stability.

Hereinafter, experimental examples including specific examples and comparative examples are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

Example 1

1 kg of a cathode material separated from a waste lithium secondary battery was cut into small units and pulverized through a milling to obtain a cathode active material mixture including a Li-Ni-Co-Mn oxide and a binder (polyvinylidene fluoride, PVDF). The cathode active material mixture had a multimodal particle size distribution and had a particle size in a range from 10 to 100 $\mu$m.

The cathode active material mixture was put into a disk pelletizer, and an active material powder having a particle size of 15 $\mu$m and a unimodal particle size distribution was prepared. The active material powder had a density of 5 g/cm$^3$.

The active material powder was fluidized in a fluidized bed reactor and reacted with a hydrogen gas to prepare a preliminary precursor mixture including lithium oxide and lithium hydroxide. An inner temperature of the fluidized bed reactor was maintained at 450 °C. A flow rate of the hydrogen gas injected into the fluidized bed reactor was 20 cm/s.

The above-obtained preliminary precursor mixture was collected and washed with water. A lithium precursor aqueous solution was separated to obtain a lithium precursor.

Examples 2 to 6

Lithium precursors were obtained by the same method as that in Example 1, except that the particle size of the active material powder, the density and the flow rate of the hydrogen gas flow rate were controlled as shown in Table 1 below.

Comparative Example

A lithium precursor was prepared by the same method as that in Example 1 except that the process of preparing the active material powder from the cathode active material mixture was not performed, and the cathode active material mixture was directly injected into the fluidized bed reactor and then the hydrogen reduction process was performed.

Experimental Example

(1) Measurement of particle scattering loss ratio

In the above-described Examples and Comparative Example, the particle scattering loss ratio was measured by calculating a weight of the preliminary precursor mixture after the reduction relative to a weight of the active material powder before the reduction as shown in Equation below.

[Equation]

$$\text{Particle scattering loss ratio (\%)} = \{(\text{the weight of the active material powder}$$

$$- \text{ the weight of the preliminary precursor mixture})/(\text{the weight of the active material}$$

$$\text{powder})\}*100$$

(2) Evaluation on fluidity

In the above-described Examples and Comparative Example, it was observed with an naked eye whether there was an active material powder that was not fluidized at a bottom of the fluidized bed reactor.

O: No active material powder aggregates were not observed at the bottom of the fluidized bed reactor.

X: Active material powder aggregates not fluidized at the bottom of the fluidized bed reactor were observed.

Physical properties and particle scattering loss ratios of the above-described Examples and Comparative Example are shown in Table 1 below.

[Table 1]

| No. | Example 1 | Example 2 | Example 3 | Example 4 | Example 5 | Example 6 | Example 7 | Example 8 | Example 9 | Example 10 | Comparative Example 1 |
|---|---|---|---|---|---|---|---|---|---|---|---|
| particle size (μm) | 15 | 100 | 200 | 400 | 800 | 800 | 1,050 | 100 | 200 | 400 | 10~100 |
| particle size distribution | unimodal | unimodal | unimodal | unimodal | unimodal | unimodal | unimodal | unimodal | unimodal | unimodal | multimodal |
| density (g/cm³) | 5 | 5 | 5 | 5 | 5 | 2.5 | 5 | 5 | 5 | 5 | 4.475 |
| flow rate of hydrogen gas (cm/s) | 20 | 20 | 20 | 20 | 20 | 20 | 20 | 10 | 10 | 15 | 20 |
| particle scatter loss ratio (%) | 25 | 8 | 6 | 4 | 2 | 3 | 2 | 4 | 3 | 3 | 50 |
| fluidity | O | O | O | O | O | O | X | O | O | X | O |

Referring to Table 1, in Examples where the cathode active material mixture was aggregated into the active material powder having the unimodal particle size distribution and then the active material powder was hydrogen reduced through the fluidization reactor, the particle scattering loss ratio was lowered compared to that from Comparative Example where the cathode active material mixture was directly reduced. Accordingly, a recovery ratio of the lithium precursor was increased by preparing the preliminary precursor mixture while minimizing the loss of active material powder particles.

However, in Example 1 where the particle size of the active material powder was less than 20 $\mu$m, the particle scattering loss ratio was greater than those of Examples 2 to 6 where the particle size was from 20 to 1,000 $\mu$m.

In Example 7 where the particle size of the active material powder exceeded 1,000 $\mu$m to have heavier powder particles that those of Examples 2 to 6, the fluidity was lowered.

In Examples 8 and 9 having the particle size of 200 $\mu$m or less and the hydrogen gas flow rate of 8 to 12 cm/s, the particle scattering loss ratios were lowered compared to those from Examples 1 and 2 having the same particle size and having the hydrogen gas flow rate greater than 12 cm/s.

Further, in Example 10 having the particle size of 400 $\mu$m or more and the hydrogen gas flow rate of less than 16 cm/s, the fluidity was lowered compared to that from Example 4 having the same particle size.

**Claims**

1.  A method for regenerating a lithium precursor, comprising:

    preparing a cathode active material mixture that comprises a lithium composite oxide particle;
    aggregating the cathode active material mixture to prepare an active material powder having a unimodal particle size distribution;
    reducing the active material powder to prepare a preliminary precursor mixture; and
    recovering a lithium precursor from the preliminary precursor mixture.

2.  The method of claim 1, wherein preparing the cathode active material mixture comprises:

    separating a cathode from a waste lithium secondary battery; and
    pulverizing the separated cathode to prepare the cathode active material mixture.

3.  The method of claim 2, wherein the cathode active material mixture has a multimodal particle size distribution.

4.  The method of claim 3, wherein a particle size of the cathode active material mixture is in a range from 10 to 500 $\mu$m.

5.  The method of claim 1, wherein a particle size of the active material powder is in a range from 20 to 1,000 $\mu$m.

6.  The method of claim 1, wherein a density of the active material powder is in a range from 1 to 10 g/cm$^3$.

7.  The method of claim 1, wherein the active material powder comprises aggregates having a volume fraction of 0.7 or more.

8.  The method of claim 1, wherein the active material powder comprises aggregates having a volume fraction of 0.58 or less.

9.  The method of claim 1, wherein aggregating the cathode active material mixture is performed using a disc pelletizer or a spray dryer.

10. The method of claim 1, wherein reducing the active material powder is performed in a fluidized bed reactor using a reductive gas.

# FIG. 1

PREPARING CATHODE ACTIVE
MATERIAL MIXTURE — S10

↓

AGGREGATING CATHODE ACTIVE
MATERIAL MIXTURE TO PREPARE
ACTIVE MATERIAL POWDER — S20

↓

REDUCING ACTIVE MATERIAL POWDER
TO PREPARE PRELIMINARY LITHIUM
PRECURSOR — S30

↓

PREPARING LITHIUM PRECURSOR FROM
PRELIMINARY LITHIUM PRECURSOR — S40

FIG. 2

FIG. 3

100

110

120

# FIG. 4

# FIG. 5

# INTERNATIONAL SEARCH REPORT

| | International application No. |
|---|---|
| | **PCT/KR2022/003513** |

**A.    CLASSIFICATION OF SUBJECT MATTER**

**C22B 26/12**(2006.01)i; **C22B 7/00**(2006.01)i; **H01M 10/54**(2006.01)i

According to International Patent Classification (IPC) or to both national classification and IPC

**B.    FIELDS SEARCHED**

Minimum documentation searched (classification system followed by classification symbols)

C22B 26/12(2006.01); B09B 3/00(2006.01); C01D 1/04(2006.01); C21B 13/00(2006.01); C21B 13/14(2006.01); C22B 1/02(2006.01); C22B 7/00(2006.01); H01M 10/052(2010.01); H01M 10/54(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬(lithium), 펠렛타이저(pelletizer), 전구체(precursor), 재생(recovering), 폐(waste), 전지(battery)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-1897134 B1 (SK INNOVATION CO., LTD.) 10 September 2018 (2018-09-10)<br>See paragraphs [0012], [0026] and [0063] and claims 1 and 4. | 1-10 |
| Y | KR 10-2086090 B1 (POSCO) 06 March 2020 (2020-03-06)<br>See paragraph [0024] and claim 1. | 1-10 |
| A | KR 10-2020238 B1 (SK INNOVATION CO., LTD.) 10 September 2019 (2019-09-10)<br>See claims 1 and 3. | 1-10 |
| A | CN 111996377 A (QUZHOU HUAYOU RESOURCES RECYCLING TECHNOLOGY CO., LTD. et al.) 27 November 2020 (2020-11-27)<br>See claim 1. | 1-10 |
| A | JP 2019-130474 A (UBE IND. LTD.) 08 August 2019 (2019-08-08)<br>See claims 1 and 4. | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 June 2022** | **16 June 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2022/003513**

| Patent document cited in search report | | | Publication date (day/month/year) | Patent family member(s) | | | Publication date (day/month/year) |
|---|---|---|---|---|---|---|---|
| KR | 10-1897134 | B1 | 10 September 2018 | CN | 111937220 | A | 13 November 2020 |
| | | | | EP | 3767737 | A1 | 20 January 2021 |
| | | | | JP | 2021-521580 | A | 26 August 2021 |
| | | | | US | 2021-0028515 | A1 | 28 January 2021 |
| | | | | WO | 2019-199015 | A1 | 17 October 2019 |
| KR | 10-2086090 | B1 | 06 March 2020 | KR | 10-2019-0075736 | A | 01 July 2019 |
| KR | 10-2020238 | B1 | 10 September 2019 | CN | 111936423 | A | 13 November 2020 |
| | | | | EP | 3770116 | A1 | 27 January 2021 |
| | | | | JP | 2021-521581 | A | 26 August 2021 |
| | | | | US | 2021-0115532 | A1 | 22 April 2021 |
| | | | | WO | 2019-199014 | A1 | 17 October 2019 |
| CN | 111996377 | A | 27 November 2020 | | None | | |
| JP | 2019-130474 | A | 08 August 2019 | JP | 6948066 | B2 | 13 October 2021 |

Form PCT/ISA/210 (patent family annex) (July 2019)